# EUROPÄISCHE PATENTSCHRIFT

(11) **EP 0 985 575 B1**
(45) Veröffentlichungstag und Bekanntmachung des Hinweises auf die Patenterteilung: **16.06.2004**
(21) Anmeldenummer: 99117754.4
(22) Anmeldetag: 09.09.1999
(51) Int. Cl.: B60N 2/12, B60N 2/36

(54) **Kraftfahrzeug-Rücksitz mit klappbarer Rückenlehne und absenkbarem Sitzteil**
Automotive vehicle rear seat with tiltable backrest and lowerable seat part
Siège arrière de véhicule automobile à dossier rabattable et assise abaissable

(30) Priorität: 10.09.1998 DE 19841363
(43) Veröffentlichungstag der Anmeldung: 15.03.2000
(73) Patentinhaber: Dr.Ing. h.c.F. Porsche Aktiengesellschaft, 70435 Stuttgart (DE); ADAM OPEL AG, 65423 Rüsselsheim (DE)
(72) Erfinder: Adamski, Pawel, Dipl.-Ing., 71069 Sindelfingen (DE); Uhlendorf, Thomas, Dipl.-Ing., 65468 Trebur (DE); Renneisen, Werner, 65205 Wiesbaden (DE); Jagus, Karl-Josef, Ing., 55437 Ockenheim (DE); Webler, Horst, Dipl.-Ing. (FH), 65428 Rüsselsheim (DE); Hagemann, Rainer, 21398 Neetze (DE); Jessen, Ingo, 31592 Stolzenau (DE); Knauss, Hans-Peter, 71229 Leonberg (DE)

(56) Entgegenhaltungen:
- DE-A- 2 849 985
- DE-A- 4 340 446
- DE-A- 4 422 920
- US-A- 4 805 953
- US-A- 5 730 496

## Beschreibung

Die vorliegende Erfindung betrifft einen Kraftfahrzeug Rücksitz mit klappbarer Rückenlehne und absenkbarem Sitzteil, wobei die Rückenlehne zur Schaffung einer Ladefläche auf das Sitzteil klappbar ist.

Rücksitze, die - ohne ausgebaut werden zu müssen - die Option bieten, eine zusätzliche sich an den Gepäckraum anschließende Ladefläche zu schaffen, sind aus dem Stand der Technik bekannt. Sie kommen hauptsächlich bei Kleinbussen, Minivans etc. zur Anwendung. Damit die zusätzlich geschaffene Ladefläche im wesentlichen auf dem Niveau des Gepäckraumbodens liegt, ist es erforderlich, daß der Sitz in seiner Ladeposition möglichst flach baut. Diesbezüglich bereitet das gepolsterte Sitzteil des Sitzes Schwierigkeiten, da es dem gewünschten Flachklappen der Rückenlehne im Wege ist.

Zur Lösung dieses Problems gibt es Sitze, bei denen das Sitzteil vor dem Lehnenklappen aus dem Klappbereich entfernbar ist (DE 43 40 446 C2, US-PS 5,730,496). Andere Konstruktionen sehen vor, daß der gesamte Sitz um eine im vorderen Bereich des Sitzteils am Fahrzeugboden angeordnete Querachse nach vorn geschwenkt werden kann (DE-OS 28 49 985, DE 44 22 920 Al). Die vorliegende Erfindung geht im Gegensatz zu den oben skizzierten Lösungen von einem Stand der Technik aus, bei dem das Sitzteil abgesenkt und die Rückenlehne auf das abgesenkte Sitzteil geklappt wird, Derartige Sitze sind aus der US 4,805,953 bekannt. Dieses Dokument wird als nächstliegender Stand der Technik angesehen. Bei dieser Lösung stützt sich das absenkbare Sitzteil in seinem vorderen Bereich auf einer am Fahrzeugboden gelagerten, längs schwenkbaren Schwinge ab, wobei die Vorverlagerung des Sitzteils relativ zur Klappachse der Rückenlehne erfolgt. Aufgabe der Erfindung ist es, einen weiteren Sitz dieser Konzeption zur Verfügung zu stellen.

Gelöst wird diese Aufgabe mit einem Sitz, der die Merkmale des Anspruchs 1 aufweist.

Durch das gleichzeitig mit dem Absenken erfolgende Vorverlagern des Sitzteils relativ zur Lehnen-Klappachse kommt die Vorderseite der Rückenlehne mit ihrem oberen Bereich, in dem sie im Vergleich mit ihrem unteren Bereich relativ dünn baut, auf dem Sitzteil zur Anlage. Dadurch bildet die Rückseite der Rückenlehne eine annähernd ebene Ladefläche. Ohne die Vorverlagerung des Sitzteils käme die Rückenlehne schon vor dem Erreichen der angestrebten ebenen Ladeflächenposition in Anlage mit dem Sitzteil, d.h. die Rückseite der Rückenlehne stünde mehr oder weniger schräg nach vorn und oben.

Weitere, vorteilhafte Ausgestaltungen der vorliegenden Erfindung gehen aus den Unteransprüchen hervor.
- Fig. 1: eine prinzipielle Seitenansicht eines in Gebrauchslage befindlichen Rücksitzes,
- Fig. 2: einen Ausschnitt A gemäß Fig. 1 in vergrößertem Maßstab,

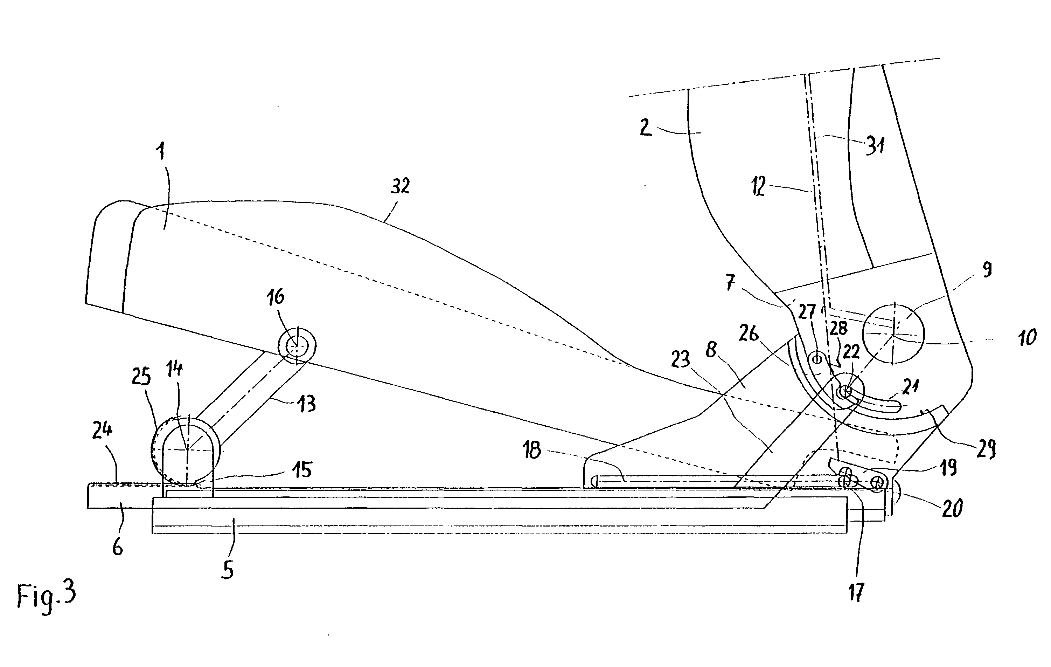

- Fig. 3: eine Darstellung gemäß Fig. 2, die den Sitz zu Beginn eines Lehnen-Klappvorganges zeigt, und
- Fig. 4: eine Seitenansicht des Rücksitzes bei vollständig geklappter Rückenlehne.

Der in der Zeichnung dargestellte Kraftfahrzeug-Rücksitz (nachfolgend abkürzend "Sitz" genannt) besitzt ein Sitzteil 1 sowie eine Rückenlehne 2 mit einer Kopfstütze 3, die über Stangen 4 in der Rückenlehne 2 geführt ist. Der Sitz ist längsverschiebbar auf dem nicht dargestellten Fahrzeugboden angeordnet. Dazu ist, wie üblich, ein System aus zwei parallelen Unter- 5 und Oberschienen 6 vorgesehen, wobei die Unterschienen 5 am Fahrzeugboden befestigt sind und die Oberschienen 6 in den Unterschienen 5 laufen.

Die Rückenlehne 2 ist beidseitig mit ihren zum Lehnenrahmen gehörenden Seitenteilen 7 drehgelenkig an Adapter 8 angeschlagen. Dazu sind Rastversteller 9 vorgesehen, die zum Stand der Technik gehören und daher hier nicht weiter erläutert werden. Die Rastversteller 9 definieren die Klappachse 10 der Rückenlehne 2.

Zur Neigungsverstellung der Rückenlehne 2 sind die Rastversteller 9 zu lösen. Das geschieht mittels eines an der Seite der Rückenlehne 2 angeordneten, nur symbolisch dargestellten Hebel 11, der über jeweils einen Seilzug 12 mit den Rastverstellern 9 verbunden ist. Nach dem Lösen der Rastversteller 9 kann ein Sitzinsasse durch Nachgeben bzw. Druck seines Rückens gegen die Rückenlehne 2, die durch nicht dargestellte Federn nach vorn vorgespannt ist, die Lehnen-Neigung entsprechend seinen Bedürfnissen einstellen.

Das Sitzteil 1 ist in seinem vorderen Bereich auf einer Schwinge 13 gelagert. Diese Schwinge 13 stützt sich an ihrem einen Ende unter Bildung einer unteren Drehachse 14 an von den Oberschienen 6 aufragenden Böcken 15 ab und ist an ihrem anderen Ende unter Bildung einer oberen Drehachse 16 drehgelenkig an das Sitzteil 1 angeschlagen.

Das Sitzteil 1 besitzt einen nicht dargestellten Stahlrahmen, von dem im hinteren Bereich jeweils ein Bolzen 17 seitlich abragt. Diese Bolzen 17 durchgreifen jeweils ein in dem benachbarten Adapter 8 vorgesehenes Langloch 18, welches sich parallel zum Fahrzeugboden und unmittelbar oberhalb der Oberschienen 6 erstreckt, mit denen die Adapter 8 starr verbunden sind.

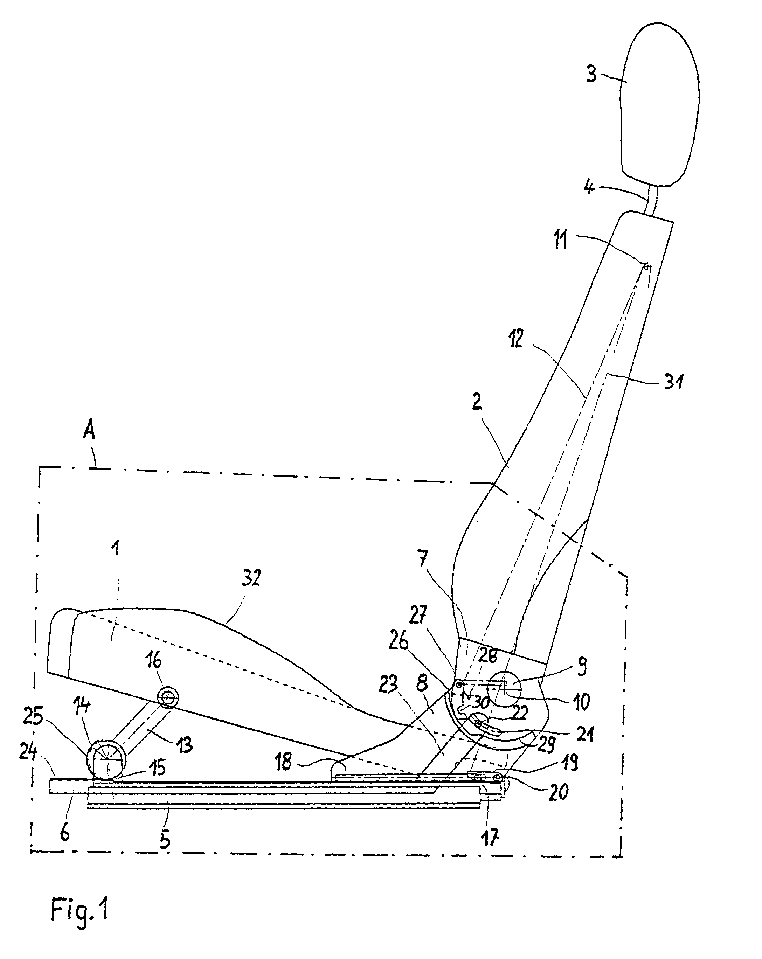

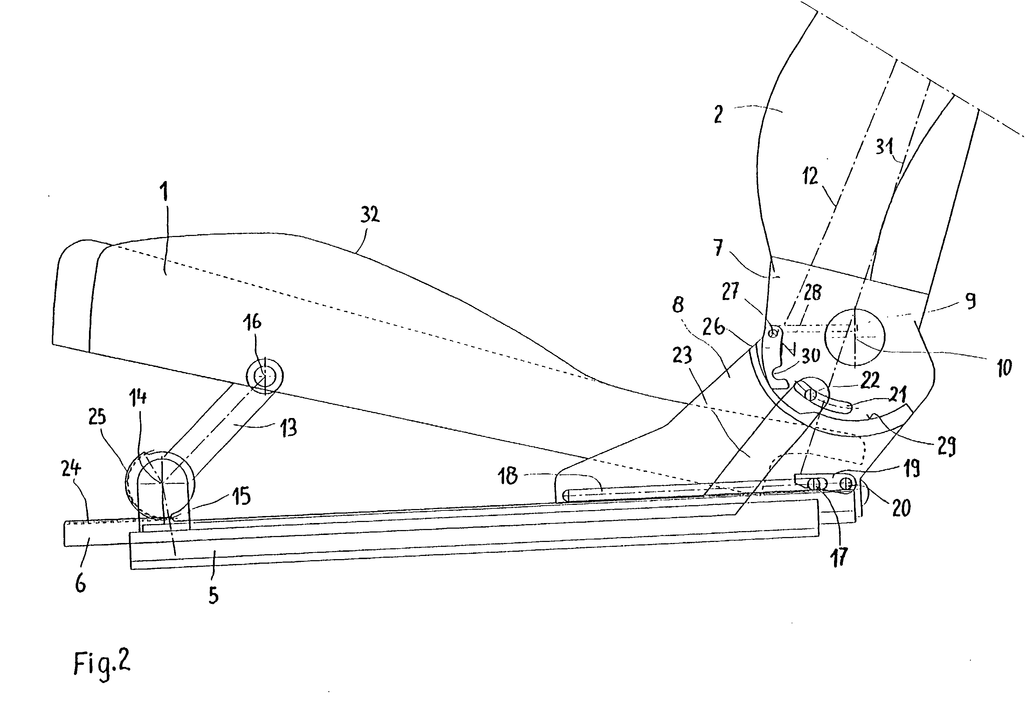

Bei in Gebrauchslage befindlichem Sitz (Fig. 1 und 2) liegen die Bolzen 17 am hinteren Ende der Langlöcher 18 an und werden jeweils von einer Klinke 19 hintergriffen, die um einen adapterfesten Bolzen 20 schwenkbar angeordnet ist. Durch diese Arretierung wird verhindert, daß das Sitzteil 1 sich ungewollt nach vorn verlagern kann. Durch Betätigung des Hebels 11 können die Klinken 19 über Seilzüge 31 gelöst werden.

Nachfolgend werden die für die Verlagerung des Sitzteils 1 erforderlichen Bauteile beschrieben. Diese können auf beiden Sitzseiten identisch ausgeführt oder auch nur auf einer Sitzseite vorhanden sein. Nachfolgend werden diese Bauteile nur für eine Sitzseite erläutert.

Unterhalb der Klappachse 10 der Rückenlehne 2 ist in deren Seitenteil 7 ein Langloch 21 vorgesehen, welches auf einem Kreisbogen um die Klappachse 10 liegt und von einem Bolzeh 22 durchgriffen wird, der zu einem starren Koppelelement 23 gehört. Die Länge des Langloches 21 und die Lage des Bolzens 22 im Langloch 21 sind so bemessen, daß der Bolzen 22 bei der Neigungsverstellung der Rückenlehne 2 im normalen Einstellbereich nicht an die Enden des Langloches 21 anschlägt, wodurch der mögliche Neigungs-Einstellbereich der Rückenlehne 2 beschränkt wäre.

Oberhalb des Langloches 21 ist eine Klinke 26 an einem seitenteilfesten Bolzen 27 gelagert, die durch eine Druckfeder 28 gegen eine adapterfeste Kulisse 29 vorgespannt ist. Diese Klinke 26 liegt unter dieser Federspannung mit ihrer Rückseite an der Kulisse 29 an und besitzt auf ihrer Vorderseite eine halbkreisförmige Ausnehmung 30 zur Aufnahme des Bolzens 22, wie später noch erläutert wird.

Das Koppelelement 23 erstreckt sich bis in den vorderen Bereich des Sitzteils 1 und ist an diesem Ende als Zahnstange 24 ausgeführt, die mit einem Zahnrad 25 kämmt, welches drehfest auf der unteren Drehachse 14 der Schwinge 13 sitzt.

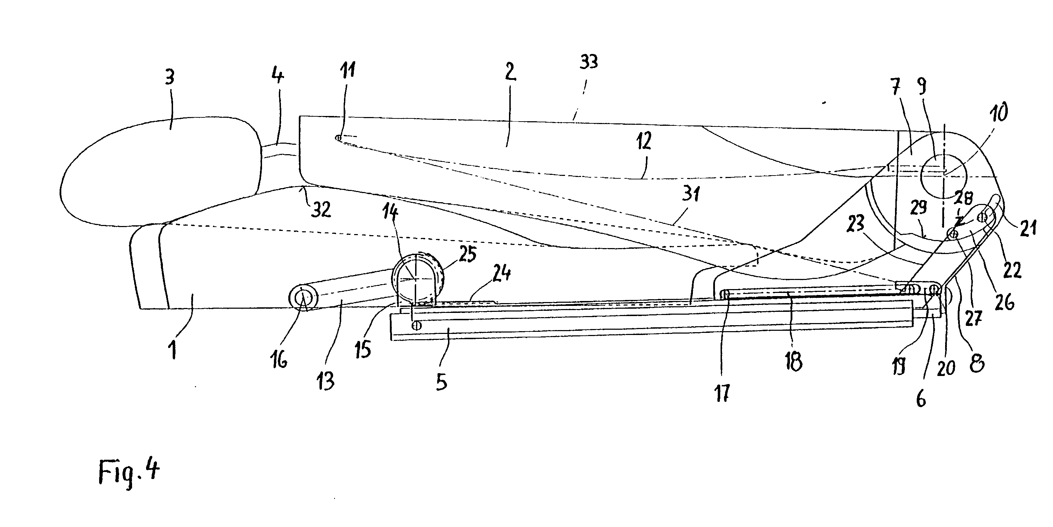

Nachfolgend wird die Überführung des Sitzes aus seiner in den Fig. 1 und 2 gezeigten Gebrauchslage in seine Ladeposition (Fig. 4) beschrieben. Dazu sind zunächst einmal mittels des Hebels 11, d.h. durch Ziehen der Seilzüge 12 und 31, die Rastversteller 9 bzw. die das Sitzteil 1 in seiner Gebrauchslage arretierenden Klinken 19 zu lösen. Die Rückenlehne 2 kann nun aufgrund ihrer Vorspannung um die Klappachse 10 nach vorn klappen. Durch diese Bewegung wandert der Bolzen 22 des Koppelelements 23 im Langloch 21 relativ gesehen im Uhrzeigersinn, bis er am vorderen Ende des Langlochs 21 anliegt. Gleichzeitig schwenkt auch die lehnenfeste Klinke 26 mit, die bei dieser Bewegung mit' ihrer Rückseite auf der Kulisse 29 des Adapters 8 entlangläuft und in dem Moment, in dem der Bolzen 22 an das Ende des Langlochs 21 anschlägt, durch die nach oben springende Kurvenform der Kulisse 29 mit ihrer Ausnehmung 30 in Eingriff mit dem Bolzen 22 des Koppelelements 23 gedrückt wird.

Durch die Anlage des Bolzens 22 an der Langlochwandung wird nun das Koppelelement 23 auf dem weiteren Klappweg der Rückenlehne 2, auf dem auch die Klinke 26 in Eingriff mit dem Bolzen 22 bleibt, mitgenommen, d.h. nach hinten verschoben. Dadurch wird das Zahnrad 24 und damit die untere Drehachse 14 der Schwinge 13 im Gegenuhrzeigersinn angetrieben, d.h. die Schwinge 13 schwenkt nach vorn, wodurch das Sitzteil 1 relativ zur Klappachse 10 nach vorn verlagert und gleichzeitig abgesenkt wird. Am Schluß des Klappvorganges liegt die in Fig. 4 gezeigte Situation vor.

Es ist gut zu erkennen, daß der Bolzen 17 im Langloch 18 vollständig nach vorn gewandert ist. Dabei versteht es sich von selbst, daß das Langloch 18 in seiner Länge so bemessen ist, daß die gewünschte Vorverlagerung des Sitzteils 1 nicht behindert wird.

Aus Fig. 4 geht hervor, daß die Rückenlehne 2 natürlich auch hier auf den höchsten Teilen der Sitzteilpolsterung, den Seitenwangen 32 aufliegt. Aufgrund der Vorverlagerung des Sitzteils 1 liegt aber der im Vergleich mit dem unteren Bereich der Rückenlehne 2 relativ dünn bauende obere Bereich auf den Seitenwangen 32 auf, wodurch die Rückseite der Rückenlehne 2 eine im wesentlichen ebene, d.h. zum Fahrzeugboden parallele Ladefläche 33 bildet. Aus der Darstellung gemäß Fig. 4 wird auch klar, daß bei nicht bzw. nicht so weit vorverlagertem Sitzteil 1 die Rückenlehne 2 mehr oder weniger schräg nach vorn und oben stehen würde.

Beim Zurückklappen der Rückenlehne 2 in die Gebrauchslage wird der Bolzen 22 durch die Klinke 26 mitgenommen, d.h. das Koppelelement 23 wird vorgeschoben. Dadurch schwenkt die Schwinge 13, vermittelt durch die Zahnstange 24 und das Zahnrad 25, um ihre untere Drehachse 14 wieder in ihre Gebrauchslage. Wenn diese erreicht ist, gibt die Klinke 26 den Bolzen 22 des Koppelelements 23 wieder frei, und die Klinken 19 rasten in die Bolzen 17 ein, wodurch das Sitzteil 1 in seiner Gebrauchslage gesichert ist.

## Patentansprüche

1. Kraftfahrzeug-Rücksitz mit klappbarer Rückenlehne und absenkbarem Sitzteil (1) wobei die Rückenlehne (2) zur Schaffung einer Ladefläche auf das Sitzteil (1) klappbar ist und sich das Sitzteil beim Vorklappen der Rückenlehne (2) absenkt und relativ zur Klappachse (10) der Rückenlehne (2) nach vorn verlagert, wobei sich das in seiner Gebrauchslage gegen Absenken arretierte Sitzteil (1) in seinem vorderen Bereich auf einer direkt oder indirekt am Fahrzeugboden gelagerten, längs schwenkbaren Schwinge (13) abstützt, **dadurch gekennzeichnet, dass** das Sitzteil (1) in seinem hinteren Bereich direkt oder indirekt am Fahrzeugboden längs verschiebbar geführt ist, wobei Rückenlehne (2) und Schwinge (13) durch ein starres Koppelglied (23) miteinander verbunden sind, welches an seinem einen Ende unterhalb der Klappachse (10) der Rückenlehne (2) mit letzterer verbunden und an seinem anderen Ende als Zahnstange (24) ausgebildet ist, die mit einem drehfest auf der unteren Drehachse (14) der Schwinge (13) sitzenden Zahnrad (25) kämmt, wobei das Koppelglied (23) die Lehnen-Klappbewegung nach dem Lösen der Arretierung des Sitzteils (1) auf die Schwinge (13) überträgt, wodurch diese nach vorn schwenkt und das Sitzteil (1) absenkt sowie nach vorn verlagert.

2. Kraftfahrzeug-Rücksitz nach Anspruch 1, **dadurch gekennzeichnet, dass** die Verbindung des Koppelgliedes (23) mit der Rückenlehne (2) durch einen vom Koppelglied (23) seitlich abragenden Bolzen (22) gebildet ist, der ein auf einem Kreisbogen um die Klappachse (10) im Lehnen-Seitenteil (7) angeordnetes Langloch (21) durchgreift, wobei die Länge des Langloches (21) sowie die Lage des Bolzens (22) im Langloch (21) so gestaltet sind, dass sich der Bolzen im Bereich der Lehnen-Neigungsverstellung anschlagfrei im Langloch (21) bewegt, während er beim Nachvornklappen der Rückenlehne (2) an das vordere Ende des Langloches (21) anschlägt und das Koppelelement (23) aufgrund der Lehnen-Klappbewegung nach hinten zieht.

3. Kraftfahrzeug-Rücksitz nach Anspruch 2, **dadurch gekennzeichnet, dass** an das Lehnen-Seitenteil (7) eine Klinke (26) schwenkbar angelenkt ist, die in dem Bolzen (22) des Koppelgliedes (23) beim Vorklappen der Rückenlehne (2) zwangsgesteuert einrastet und den Bolzen (22) erst wieder freigibt, wenn beim Zurückklappen der Rückenlehne (2) das Sitzteil (1) seine Gebrauchslage erreicht hat.

4. Kraftfahrzeug-Rücksitz nach Anspruch 3, **dadurch gekennzeichnet, dass** die Klinke (26) auf einer am Adapter (8) vorgesehenen Kulisse (29) läuft, deren Kontur den Bewegungsablauf der Klinke (26) beim Lehnen-Klappvorgang steuert.

5. Kraftfahrzeug-Rücksitz nach einem der vorstehenden Ansprüche 2 bis 4, **dadurch gekennzeichnet, dass** das Sitzteil (1) in seinem hinteren Bereich beidseitig seitlich abragende Bolzen (17) besitzt, die jeweils in einem Langloch (18) des benachbarten Adapters (8) längsverschiebbar geführt sind, wobei zumindest einer der Bolzen (17) bei in Gebrauchslage befindlichem Sitz im Langloch (18) gegen Längsverschiebung arretiert ist.

## Claims

1. A rear seat of a motor vehicle with a foldable backrest and a lowerable seat part (1), wherein the backrest (2) is capable of being folded onto the seat part (1) in order to provide a loading area and when the backrest (2) is folded forward the seat part is lowered and is displaced forward relative to the folding axis (10) of the backrest (2), wherein the seat part (1) locked in its position of use so as to prevent it from being lowered is supported in its front region on a rocker arm (13) which is mounted directly or indirectly on the vehicle floor and which is capable of being pivoted longitudinally, **characterized in that** the seat part (1) is guided in its rear region so as to be longitudinally displaceable directly or indirectly on the vehicle floor, wherein the backrest (2) and the rocker arm (13) are connected to each other by a rigid coupling member (23) which is connected at one of its ends below the folding axis (10) of the backrest (2) to the said backrest (2) and is constructed at its other end in the form of a toothed rack (24) which meshes with a toothed wheel (25) mounted in a rotationally fixed manner on the lower axis of rotation (14) of the rocker arm (13), wherein the coupling member (23) transmits the folding movement of the backrest to the rocker arm (13) after the locking of the seat part (1) is released, as a result of which the said rocker arm (13) pivots forward and lowers the seat part (1) and displaces it forward.

2. A rear seat of a motor vehicle according to Claim 1, **characterized in that** the connexion of the coupling member (23) to the backrest (2) is formed by a pin (22) which projects laterally from the coupling member (23) and which engages through an elongate hole (21) situated in the lateral part (7) of the backrest on an arc around the folding axis (10), wherein the length of the elongate hole (21) and the position of the pin (22) in the elongate hole (21) are arranged in such a way that in the region of the inclined setting of the backrest the pin moves without impact in the elongate hole (21), whereas when the backrest (2) is folded forward it strikes against the front end of the elongate hole (21) and pulls the coupling element (23) towards the rear as a result of the folding movement of the backrest.

3. A rear seat of a motor vehicle according to Claim 2, **characterized in that** a catch (26) is articulated in a pivotable manner to the lateral part (7) of the backrest, the said catch (26) engaging in the pin (22) of the coupling member (23) in a forcibly controlled manner as the backrest (2) is folded forward and releasing the pin (22) again only when the seat part (1) has reached its position of use as the backrest (2) is folded back.

4. A rear seat of a motor vehicle according to Claim 3, **characterized in that** the catch (26) runs on a slide block (29) which is provided on the adapter (8) and the outline of which controls the movement pattern of the catch (26) during the folding procedure of the backrest.

5. A rear seat of a motor vehicle according to one of the preceding Claims 2 to 4, **characterized in that** in its rear region the seat part (1) has pins (17) which project laterally on both sides and which are each guided in a respective elongate hole (18) in the adjacent adapter (8) so as to be longitudinally displaceable, wherein at least one of the pins (17) is locked so as to prevent it from being displaced longitudinally when seated in the position of use.

## Revendications

1. Siège arrière de véhicule automobile à dossier rabattable et assise (1) abaissable, le dossier (2) étant rabattable pour réaliser une surface de chargement sur l'assise (1) et, lorsqu'on rabat vers l'avant le dossier (2), l'assise s'abaisse et se déplace vers l'avant par rapport à l'axe de rabattement (10) du dossier (2), l'assise (1) bloquée contre un abaissement, dans sa position d'utilisation, prenant appui dans sa zone avant sur une bielle oscillante (13) montée directement ou indirectement sur le plancher du véhicule et pouvant pivoter longitudinalement, **caractérisé en ce que** dans sa zone arrière, l'assise (1) est guidée, directement ou indirectement, de manière à pouvoir coulisser longitudinalement sur le plancher du véhicule, le dossier (2) et la bielle oscillante (13) étant reliés entre eux par un élément d'accouplement (23) rigide qui, à l'une de ses extrémités, est relié au dossier (2) au-dessous de l'axe de rabattement (10) de celui-ci, et est réalisé, à son autre extrémité, comme crémaillère (24) qui engrène avec une roue dentée (25) calée solidairement en rotation sur l'axe de rotation (14) inférieur de la bielle oscillante (13), l'élément d'accouplement (23) transmettant le mouvement de rabattement du dossier, après déverrouillage du blocage de l'assise (1), à la bielle oscillante (13), ce qui fait que celle-ci pivote vers l'avant et l'assise (1) s'abaisse et se déplace vers l'avant.

2. Siège arrière de véhicule automobile selon la revendication 1, **caractérisé en ce que** la liaison de l'élément d'accouplement (23) et du dossier (2) est assurée par une cheville (22) dépassant latéralement de l'élément d'accouplement (23), laquelle traverse un trou oblong disposé sur un arc de cercle autour de l'axe de rabattement (10) dans la partie latérale (7) du dossier, la longueur du trou oblong (21) ainsi que la position de la cheville (22) dans le trou oblong (21) étant telle que la cheville se déplace dans le trou oblong (21) sans venir en butée, dans la zone du réglage de l'inclinaison du dossier, tandis que lorsque le dossier (2) est rabattu vers l'avant, elle vient buter contre l'extrémité avant du trou oblong (21) et tire vers l'arrière l'élément d'accouplement (23) du fait du mouvement de rabattement du dossier.

3. Siège arrière de véhicule automobile selon la revendication 2, **caractérisé en ce que** sur la partie latérale (7) du dossier est articulé, de manière à pouvoir pivoter, un cliquet (26) qui s'accroche, commandé à force, dans la cheville (22) de l'élément d'accouplement (23) lorsque le dossier (2) est rabattu vers l'avant, et ne libère la cheville (22) que lorsque l'assise (1) a atteint sa position d'utilisation, lorsque le dossier (2) est rabattu vers l'arrière.

4. Siège arrière de véhicule automobile selon la revendication 3, **caractérisé en ce que** le cliquet (26) passe sur une coulisse (29), prévue sur l'adaptateur (8), dont le contour commande la séquence de mouvement du cliquet (26) pendant le rabattement du dossier.

5. Siège arrière de véhicule automobile selon l'une des revendications 2 à 4 précédentes, **caractérisé en ce que** l'assise (1) possède, dans sa zone arrière, des deux côtés, des chevilles (17) dépassant latéralement qui sont guidées chacune, de manière à pouvoir coulisser longitudinalement, dans un trou oblong (18) de l'adaptateur (8) adjacent, au moins l'une des chevilles (17) étant bloquée dans le trou oblong (18) contre un coulissement longitudinal, lorsque le siège se trouve en position d'utilisation.
